# EUROPÄISCHE PATENTSCHRIFT

(11) **EP 2 372 209 B1**
(45) Veröffentlichungstag und Bekanntmachung des Hinweises auf die Patenterteilung: **12.07.2017**
(21) Anmeldenummer: 11001963.5
(22) Anmeldetag: 10.03.2011
(51) Int. Cl.: F01N 13/18, F16L 17/035, F16J 15/00, F16J 15/02, F16L 37/088

(54) **Abgasleitung für ein Kraftfahrzeug und Abgasanlage**
Exhaust gas pipe for a motor vehicle and exhaust gas unit
Conduite de gaz d'échappement pour un véhicule automobile et installation de traitement des gaz d'échappement

(30) Priorität: 30.03.2010 DE 102010013412
(43) Veröffentlichungstag der Anmeldung: 05.10.2011
(73) Patentinhaber: NORMA Germany GmbH, 63277 Maintal (DE)
(72) Erfinder: Bauer, Andreas, 63477 Maintal (DE); Ignaczak, Brian Thomas, Rochester, MI 48307 (US)
(74) Vertreter: Patentanwälte Olbricht Buchhold Keulertz

(56) Entgegenhaltungen:
- DE-A1-102007 021 687
- DE-B3-102005 009 688
- JP-A- 2006 009 914
- JP-U- H0 446 294
- US-A- 5 201 835
- US-B1- 6 241 254

## Beschreibung

Die Erfindung betrifft eine Abgasleitung für ein Kraftfahrzeug mit mindestens einem ersten Endabschnitt und mindestens einem zweiten Endabschnitt, die gasdicht miteinander verbunden sind. Ferner betrifft die Erfindung eine Abgasanlage eines Kraftfahrzeugs mit einer derartigen Abgasleitung.

Durch Abgasleitungen eines Kraftfahrzeuges werden die in der Regel sehr heißen Abgase eines Verbrennungsmotors abgeleitet. Die Abgase enthalten in der Regel giftige Bestandteile, so dass ein Entweichen der Abgase aus der Abgasleitung verhindert werden muss. Da es nicht möglich ist, eine Abgasleitung aus einem einzigen Rohrstück herzustellen, müssen Endabschnitte einzelner Rohrabschnitte gasdicht miteinander verbunden werden. Die Abgasleitungen sind dabei in der Regel aus einem Metall, wie beispielsweise einem nicht rostenden Stahl gebildet. Dadurch ist es möglich, verschiedene Endabschnitte einzelner Rohre miteinander zu verschweißen und so eine gasdichte Verbindung zu erhalten.

Es ist auch bekannt, Endabschnitte miteinander zu verschrauben, wobei gegebenenfalls zusätzliche Schraubschellen eingesetzt werden müssen. Bei Schraubverbindungen besteht allerdings die Gefahr, dass diese durch Vibrationen, wie sie beispielsweise im Betrieb eines Kraftfahrzeugs auftreten, gelockert werden können. Eine gasdichte Verbindung ist dann nicht immer gewährleistet DE 699 18 887 T2 zeigt eine Kombination von Rohren und einer Dichtung zu deren Verbindung, wobei ein erster Endabschnitt einen Einsteckbereich aufweist, der in einen Aufnahmebereich eines zweiten Endabschnitts eingesteckt ist. Die Herstellung der Verbindung der Endabschnitte erfordert einen relativ großen Aufwand. So ist das Verschweißen der Endabschnitte nur durch entsprechendes Fachpersonal durchführbar. Auch ein Verschrauben der Endabschnitte benötigt relativ viel Zeit. Dabei ist die erforderliche Dichtigkeit nicht immer gewährleistet. Der Erfindung liegt nun die Aufgabe zugrunde, den Aufwand zur Herstellung einer gasdichten Verbindung der beiden Endabschnitte zu verringern.

Erfindungsgemäß wird diese Aufgabe bei einer Abgasleitung der eingangs genannten Art dadurch gelöst, dass der erste Endabschnitt einen Einsteckbereich aufweist, der in einem Aufnahmebereich des zweiten Endabschnitts eingesteckt ist, wobei zwischen dem Einsteckbereich und dem Aufnahmebereich eine metallische Radialdichtung angeordnet ist.

Eine Verbindung der beiden Endabschnitte erfolgt demnach nur durch einfaches Zusammenstecken. Der erste und zweite Endabschnitt bilden damit eine Steckkupplung. Die erforderliche Dichtigkeit wird nicht durch das Einbringen von Kräften, wie bei einer Schraubverbindung, oder durch Erzeugen einer stoffschlüssigen Verbindung, wie beim Schweißen, erzeugt, sondern mit Hilfe der metallischen Radialdichtung. Die Radialdichtung dichtet den ersten Endabschnitt gegenüber dem zweiten Endabschnitt radial ab. Durch die Verwendung eines metallischen Werkstoffs ist dabei eine ausreichende Temperaturbeständigkeit gewährleistet, so dass auch durch heiße Abgase keine Beschädigung der Dichtung erfolgt. Dabei weist ein metallischer Werkstoff eine ausreichende Elastizität auf, um Toleranzen zwischen dem Einsteckbereich und dem Aufnahmebereich und Temperaturschwankungen auszugleichen. Durch die einfache Steckverbindung mit einer-metallischen Radialdichtung zwischen dem Einsteckbereich und dem Aufnahmebereich wird also der Herstellungsaufwand für die Abgasleitung stark verringert, wobei gleichzeitig eine kostengünstige Herstellung möglich ist.

Vorzugsweise sind der erste und der zweite Endabschnitt miteinander verrastet. Durch ein Verrasten der Endabschnitte wird ein ungewolltes Lösen der Endabschnitte voneinander verhindert. Die Dichtigkeit der Abgasleitung ist auch dann gewährleistet, wenn Vibrationen auftreten. Die Verrastung muss nur ein Lösen der Endabschnitte voneinander verhindern und nicht für eine Abdichtung sorgen. Dementsprechend kann das Verrasten durch relativ einfache Mittel erfolgen. Erfindungsgemäss weist die Radialdichtung an einem ersten axialen Ende einen in eine erste Radialrichtung vorstehenden, umlaufenden Vorsprung und an einem zweiten axialen Ende eine erste Dichtlippe auf, die entgegengesetzt zur ersten Radialrichtung geneigt ist. Durch diese Ausbildung wird die Elastizität der Radialdichtung gesteigert. Durch die an unterschiedlichen Enden in entgegengesetzter Radialrichtung vorstehenden Elemente Dichtlippe und Vorsprung, von denen einer am Einsteckbereich und einer am Aufnahmebereich anliegt, steht für eine Verformung der Radialdichtung relativ viel Material zur Verfügung. Eine Verformung ist sozusagen diagonal über den Querschnitt der Radialdichtung möglich. Dadurch kann auch durch eine metallische Dichtung die erforderliche Elastizität erhalten werden, um größere Toleranzen auszugleichen. Beispielsweise ist ein Toleranzausgleich von plus/minus 3/10 mm möglich, wobei über den gesamten Bereich eine Dichtigkeit gewährleistet ist.

Vorzugsweise weist die Radialdichtung am zweiten Ende eine zweite, in die erste Radialrichtung geneigte Dichtlippe auf. Die zweite Dichtlippe ist also am gleichen Ende wie die erste Dichtlippe angeordnet, aber in entgegengesetzter Radialrichtung geneigt. Dadurch wird eine zweite Dichtfläche erhalten. Die Dichtlippen können relativ dünnwandig ausgebildet sein, so dass eine hohe Elastizität erhalten wird.

Dabei ist besonders bevorzugt, dass zwischen den Dichtlippen eine Ringnut ausgebildet ist. Durch das Vorsehen einer Ringnut wird die Elastizität der Radialdichtung erhöht. Insbesondere wird eine Bewegung der Dichtlippen aufeinander zu vereinfacht. Die Dichtlippen können dann im unbelasteten Zustand einen radialen Abstand zueinander aufweisen, der größer ist als ein Abstand zwischen dem Einsteckbereich und dem Aufnahmebereich in radialer Richtung. Beim Einstecken des Einsteckbereichs in den Aufnahmebereich erfolgt dann eine elastische Verformung der Dichtlippen, die durch das Vorsehen der Ringnut problemlos möglich ist. Dadurch ist eine relativ große Verformung möglich, so dass Toleranzen gut ausgeglichen werden können, ohne zu Problemen bei der Dichtigkeit zu führen.

Vorzugsweise ist eine Mantelfläche der Radialdichtung zu einer Rotationsachse geneigt und geht insbesondere in die erste Dichtlippe stetig über. Eine Dicke der Radialdichtung nimmt also stetig von einem ersten zum zweiten axialen Ende zu. Dadurch ist die Radialdichtung am ersten axialen Ende mit seiner Mantelfläche vom entsprechenden Endabschnitt beabstandet, so dass eine Verformung der Radialdichtung durch den auf gleicher Höhe befindlichen umlaufenden Vorsprung möglich ist. Das Gegenlager für diese Verformung bildet dann die erste Dichtlippe. Bei einem stetigen Übergang der Mantelfläche in die Dichtlippe wird das Auftreten von Spannungsspitzen vermieden und so eine hohe Lebensdauer der Radialdichtung erreicht.

Vorzugsweise erstreckt sich die erste Dichtlippe axial weiter als die zweite Dichtlippe. Dadurch ist es möglich, im Bereich der ersten Dichtlippe einen relativ großen Dichtbereich vorzusehen. Auf der Seite der zweiten Dichtlippe befindet sich auch der umlaufende Vorsprung, so dass insgesamt dort eine ausreichende Dichtigkeit gewährleistet ist.

Vorzugsweise erstreckt sich der Vorsprung im unbelasteten Zustand der Radialdichtung weiter in der ersten Radialrichtung als die zweite Dichtlippe. Dadurch wird gewährleistet, dass die Hauptverformung der Radialdichtung durch den umlaufenden Vorsprung hervorgerufen wird und nicht durch die Dichtlippe. Die zweite Dichtlippe wird dadurch entlastet.

Vorzugsweise ist die Radialdichtung radial vorgespannt in einem der Endabschnitte gehalten. Dabei ist die Radialdichtung mit Hilfe des Vorsprungs gehalten, der sich in Radialrichtung weiter erstreckt als die zweite Dichtlippe. Durch die radiale Vorspannung kann die Radialdichtung in einem der Endabschnitte vormontiert sein. Die Montage vereinfacht sich dadurch.

In einer bevorzugten Ausführungsform weist der Aufnahmebereich zu einem freien Ende hin einen Bereich mit vergrößertem Durchmesser auf, wobei die Radialdichtung in dem Bereich angeordnet ist. Dieser Bereich mit vergrößertem Durchmesser vereinfacht zum einen das Einführen des Einsteckbereichs und ermöglicht zum anderen die geschützte Anordnung der Radialdichtung. Während die eigentliche Führung des Einsteckbereichs im Aufnahmebereich außerhalb des Bereichs mit vergrößertem Durchmesser erfolgt, braucht die Radialdichtung keine Führungskräfte aufnehmen. Dementsprechend wird die Belastung der Radialdichtung gering gehalten, so dass eine hohe Lebensdauer zu erwarten ist. Dabei ist die Radialdichtung derart angeordnet, dass das erste axiale Ende dem freien Ende des Aufnahmebereichs zugewandt ist. Die innere Mantelfläche der Radialdichtung ist dann derart geneigt, dass sie in Richtung zum freien Ende hin ebenfalls einen zunehmenden Innendurchmesser aufweist. Dadurch ist ein Einführen des Einsteckbereichs entlang der Radialdichtung relativ einfach möglich, wobei eine elastische Verformung der Dichtlippen erfolgt. Bei einem Herausziehen des Einsteckbereichs wird hingegen die Dichtlippe durch Reibung am Einsteckbereich gehalten und vergrößert damit die Dichtwirkung. Gleichzeitig kann möglicherweise zwischen dem Einsteckbereich und dem Aufnahmebereich hindurch strömendes Abgas in die Ringnut der Radialdichtung gelangen. Dieses Abgas drückt dann die beiden Dichtlippen radial auseinander, und sorgt so für eine sichere Anlage der Dichtlippen. Die Radialdichtung ist damit sozusagen selbst dichtend. Erfindungsgemäss ist die Radialdichtung zwischen einem Sicherungsring und einer stufenförmigen Durchmesserverringerung des Aufnahmebereichs angeordnet. Eine axiale Verschiebung der Radialdichtung ist dann zuverlässig verhindert. Der Sicherungsring kann beispielsweise eingepresst sein. Die Montage des Sicherungsrings ist dann relativ einfach.

Vorzugsweise weist der Einsteckbereich einen Rastvorsprung auf, mit einer Rastseite und einer Anlaufseite, die insbesondere zur Rotationsachse geneigt ist, wobei ein Rastmittel an der Rastseite anliegt. Das Rastmittel kann beim Einführen des Einsteckbereichs in den Aufnahmebereich über die Anlaufseite gleiten und dabei geöffnet werden, während es hinter dem Rastvorsprung einrastet, sobald der Einsteckbereich vollständig in den Aufnahmebereich eingesteckt ist. Die Rastseite erstreckt sich dabei in Radialrichtung, so dass ein axiales Herausziehen des Einsteckbereichs aus dem Aufnahmebereich durch Formschluss zwischen dem Rastmittel und der Rastseite verhindert wird.

In einer bevorzugten Ausführungsform ist das Rastmittel als Federklemme ausgebildet, die in einem Schlitz im Aufnahmebereich geführt ist, wobei die Federklemme gegebenenfalls U-förmig ausgebildet ist und Schenkel der Federklemmen jeweils einen nach außen gebogenen Abschnitt aufweisen, dessen Innenradius einem Außenradius des Einsteckbereichs entspricht. Durch eine derartige Ausbildung des Rastmittels kann dieses zum einen in dem oder den Schlitzen des Aufnahmebereichs vorpositioniert werden, wobei ein Einstecken des Einführbereichs ohne zusätzliche Betätigung der Federklemme möglich ist. Die Federklemme schnappt vielmehr automatisch hinter dem Rastvorsprung ein, sobald der Einsteckbereich vollständig im Aufnahmebereich aufgenommen ist. Durch die gebogene Gestaltung der Schenkel der Federklemme liegt diese über einem relativ großen Bereich am Rastvorsprung an. Dadurch sind relativ große Kräfte übertragbar.

Die Aufgabe wird auch durch eine Abgasanlage mit den Merkmalen des Anspruchs 14 gelöst.

Eine derartige Abgasanlage weist eine Vielzahl von Rohrelementen und Zusatzelementen auf, deren Endabschnitte jeweils miteinander verbunden werden müssen. Dabei ist eine gasdichte Verbindung aufgrund der häufig giftigen Abgase erforderlich. Durch das Verbinden der Endabschnitte miteinander durch eine Steckkupplung, wobei zwischen dem Einsteckbereich und dem Aufnahmebereich eine metallische Radialdichtung angeordnet ist, ist die Herstellung einer gasdichten Verbindung relativ einfach und problemlos möglich. Die Rohre können dabei einstückig mit den Endabschnitten ausgebildet und beispielsweise aus Metall gebildet sein. Auch der Aufnahmebereich und der Einsteckbereich sind dann aus Metall gebildet und bilden eine Metallkupplung bzw. eine Einsteckkupplung.

Die Erfindung wird im Folgenden anhand eines bevorzugten Ausführungsbeispiels in Verbindung mit der Zeichnung näher beschrieben. Hierin zeigen:
- Fig. 1: einen Querschnitt durch einen Verbindungsbereich einer Abgasleitung,
- Fig. 2: eine Draufsicht zu Fig. 1,
- Fig. 3: einen Ausschnitt aus Fig. 1 und
- Fig. 4: eine Einzelansicht einer Radialdichtung.

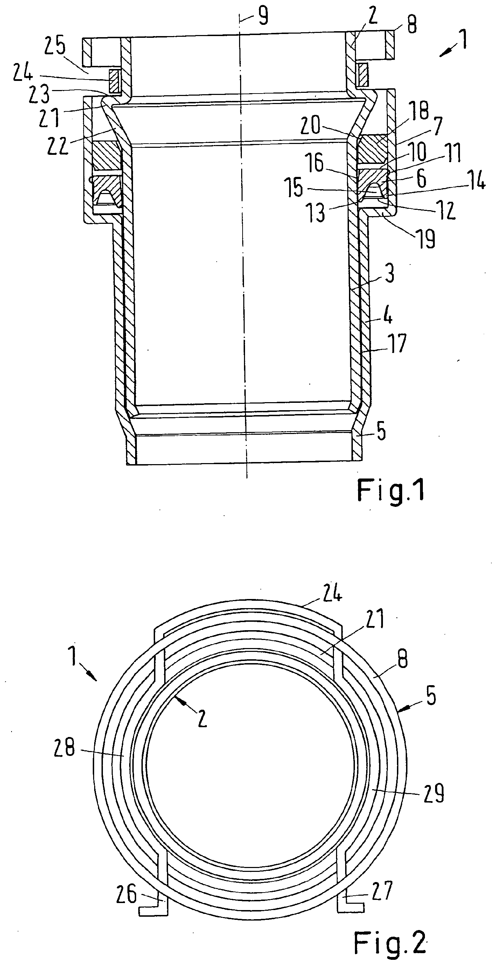

In Fig. 1 ist eine Abgasleitung 1 für ein nicht dargestelltes Kraftfahrzeug schematisch im Querschnitt dargestellt. Dabei ist ein erster Endabschnitt 2 mit einem Einsteckbereich 3 in einen Aufnahmebereich 4 eines zweiten Endabschnitts 5 eingesteckt. Die Endabschnitte 2, 5 sind dabei Teile von Rohren der Abgasleitung 1. Die Abgasleitung 1 ist aus einem metallischen Werkstoff hergestellt.

Zum Herstellen einer gasdichten Verbindung zwischen dem ersten Endabschnitt 2 und dem zweiten Endabschnitt 5 ist zwischen dem Einsteckbereich 3 und dem Aufnahmebereich 4 eine metallische Radialdichtung 6 angeordnet. Die metallische Radialdichtung 6 ist dabei in einem Bereich 7 mit vergrößertem Durchmesser des Aufnahmebereichs 4 angeordnet, wobei der Bereich 7 an einem freien Ende 8 des zweiten Endabschnitts 5 ausgebildet ist.

Die Radialdichtung 6 ist ringförmig und rotationssymmetrisch zu einer Radialachse 9 ausgebildet. An einem ersten axialen Ende 10 weist die Radialdichtung 6 einen umlaufenden Vorsprung 11 auf, der radial nach außen gerichtet ist. An einem zweiten axialen Ende 12 weist die Radialdichtung 6 eine radial nach innen geneigte erste Dichtlippe 13 und eine radial nach außen gerichtete zweite Dichtlippe 14 auf. Zwischen der ersten Dichtlippe 13 und der zweiten Dichtlippe 14 ist eine Ringnut 15 ausgebildet, die von den Dichtlippen 13, 14 begrenzt wird.

Eine radial innen liegende Mantelfläche 16 der Radialdichtung 6 verläuft geneigt zur Rotationsachse 9, wobei ein kleinster Innendurchmesser im Bereich des zweiten axialen Endes 12 und ein größter Innendurchmesser im Bereich des ersten axialen Endes 10 ausgebildet ist. Der Innendurchmesser ändert sich dabei stetig.

Die Radialdichtung 6 liegt mit dem Vorsprung 11 und der zweiten Dichtlippe 14 radial am Aufnahmebereich an und mit der ersten Dicht-lippe 13 am Einsteckbereich. Da ein radialer Abstand zwischen der ersten Dichtlippe 13 und der zweiten Dichtlippe 14 größer ist als ein radialer Abstand zwischen Einsteckbereich und Aufnahmebereich, erfolgt eine elastische Verformung der Radialdichtung. Dabei wird die Radialdichtung im Bereich 6 im Bereich des Vorsprungs 11 radial nach innen verformt, so dass sich die Neigung der Mantelfläche 16 verringert. Dadurch wird die erste Dichtlippe 13 gegen den Einsteckbereich gepresst. Gleichzeitig liegt die zweite Dichtlippe 14 am Aufnahmebereich 4 an. Dadurch wird eine gasdichte Abdichtung erhalten.

Wenn Abgas durch einen aufgrund von Bauteiltoleranzen möglicherweise vorhandenen Spalt 17 zwischen Einsteckbereich 3 und Aufnahmebereich 4 strömt, gelangt dieser in die Ringnut 15 der Radialdichtung 6. Das Abgas drückt dann die erste Dichtlippe 13 und die zweite Dichtlippe 14 radial auseinander und verstärkt so die jeweilige Anlage am Einsteckbereich bzw. am Aufnahmebereich. Mit zunehmendem Druck des Abgases erhöht sich damit die Dichtwirkung. Dadurch ist eine sehr sichere Abdichtung gewährleistet.

Zur Sicherung der Radialdichtung 6 ist diese zwischen einem Sicherungsring 18 und einer stufenförmigen Durchmesserverringerung 19 des Aufnahmebereichs 4 angeordnet. Eine axiale Verschiebung der Radialdichtung 6 ist daher nur in geringem Maße möglich. Der Sicherungsring 18 ist dabei in den Bereich 7 vom freien Ende 8 aus eingepresst. Eine radial innen liegende Kante 20 des Sicherungsrings 18, die dem freien Ende 8 zugewandt ist, ist abgeschrägt, um zum einen ein einfaches Einführen des Einsteckbereichs 3 zu ermöglichen und um zum anderen ein Verklemmen mit dem Einsteckbereich 3 zu verhindern.

Im Einsteckbereich 3 ist ein Rastvorsprung 21 mit einer Anlaufseite 22 und einer Rastseite 23 ausgebildet. Die Anlaufseite 22 ist dabei geneigt zur Rotationsachse 9, während die Rastseite 23 in Radialrichtung verläuft. Wenn der erste Endabschnitt 2 mit seinem Einsteckbereich 3 vollständig in dem Aufnahmebereich 4 des zweiten Endabschnitts 5 aufgenommen ist, rastet ein Rastmittel 24 hinter dem Rastvorsprung 21 ein und verhindert so ein ungewünschtes Lösen des ersten Endabschnitts 2 vom zweiten Endabschnitt 5. Das Rastmittel 24 ist dabei in einem Schlitz 25, der im Aufnahmebereich 4 ausgebildet ist, angeordnet. Dabei ist das Rastmittel 24 elastisch verformbar.

In Fig. 2 ist die Abgasleitung 1 aus Fig. 1 in Draufsicht dargestellt. Das Rastmittel 24 ist als U-förmige Federklemme mit einem ersten Schenkel 26 und einem zweiten Schenkel 27 ausgebildet. Jeder der Schenkel 26, 27 weist dabei einen nach außen gebogenen Abschnitt 28, 29 auf, dessen Innendurchmesser einem Außendurchmesser des ersten Endabschnitts 2 im Einsteckbereich 3 entspricht. Dadurch ist eine relativ große Anlagefläche für die Schenkel 26, 27 an dem Rastvorsprung 23 möglich.

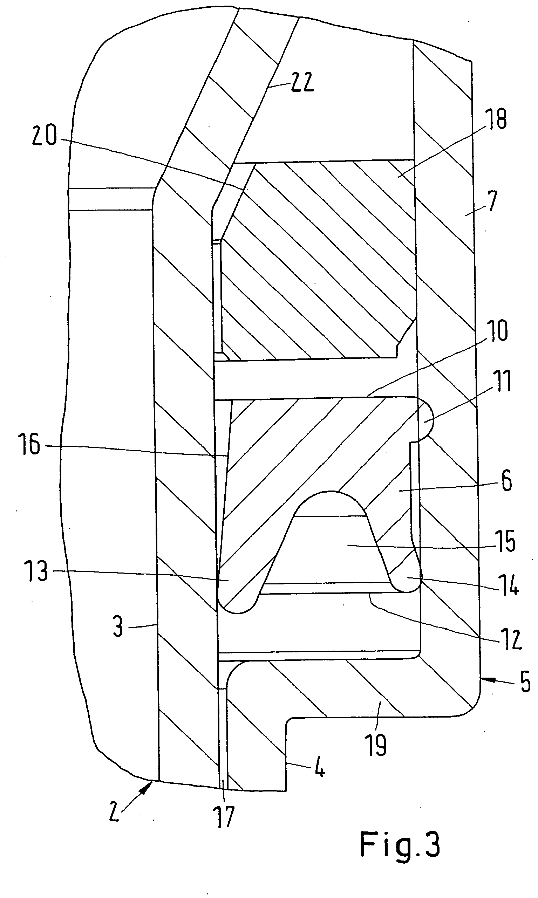

In Fig. 3 ist im Detail die Anordnung der Radialdichtung 6 und des Sicherungsrings 18 im Bereich 7 des Aufnahmebereichs 4 des zweiten Endabschnitts 5 gezeigt. Gleiche Teile sind dabei mit den gleichen Bezugszeichen versehen. Indem der Vorsprung 11 derartig dargestellt ist, dass es den Anschein erweckt, dass er sich bis in eine Seitenwand im Bereich 7 hinein erstreckt, soll verdeutlicht werden, dass die Radialdichtung 6 ein Übermaß aufweist und dementsprechend unter Vorspannung im Aufnahmebereich 4 bzw. im Bereich 7 gehalten ist. Die Radialdichtung 6 wird in Wirklichkeit derartig verformt werden, dass der Vorsprung 11 radial nach innen bewegt wird, wodurch die Mantelfläche 16 in Richtung zum Einsteckbereich 3 bewegt wird, so dass sie ihre Neigung verringert. Dadurch wird die erste Dichtlippe 13 gegen den Einsteckbereich 3 gedrückt. Gleichzeitig wird die zweite Dichtlippe 14 gegen den Aufnahmebereich gedrückt. Dadurch kann ein guter Toleranzausgleich erfolgen, wobei gleichzeitig eine hohe Dichtigkeit gewährleistet ist. Dabei steht für eine Verformung der Radialdichtung 6 relativ viel Fläche zur Verfügung. Die Elastizität der Dichtung wird durch die Ausbildung der Ringnut 15 noch vergrößert. Auch wenn die Radialdichtung 6 durch ihre Ausbildung mit einem metallischen Material nicht eine so hohe Elastizität wie eine Gummidichtung aufweist, können daher große Toleranzen ausgeglichen werden.

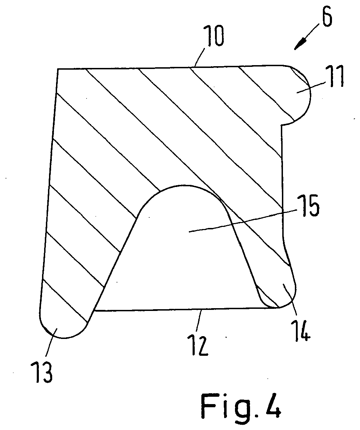

In Fig. 4 ist ein Querschnitt der Radialdichtung 6 gezeigt. Gleiche Elemente sind dabei wieder mit gleichen Bezugszeichen versehen.

Anstatt wie bisher bei Abgasleitungen üblich, wird erfindungsgemäß vorgeschlagen, eine Steckkupplung zur Verbindung zweier Endabschnitte vorzusehen. Die erforderliche Dichtigkeit wird dabei durch eine metallische Radialdichtung erhalten, die ausreichend temperaturbeständig ist, da sie aus einem metallischen Werkstoff gebildet ist. Durch die besondere Ausformung der Radialdichtung ist dabei für eine hohe Elastizität gesorgt.

Durch das Zusammenspiel eines radialen Vorsprungs mit radialen Dichtlippen erfolgt eine relativ großflächige Verformung der Radialdichtung. Durch das Vorsehen radialer Dichtungen stehen dabei relativ große Dichtflächen zur Verfügung. Gleichzeitig kann ein möglicherweise gegen die Radialdichtung drückendes Abgas zur Verstärkung der Abdichtung genutzt werden. Insgesamt wird daher eine gasdichte Verbindung erhalten, obwohl die Herstellung ohne die bisher erforderlichen aufwändigen Verbindungsmethoden auskommt.

## Patentansprüche

1. Abgasleitung für ein Kraftfahrzeug mit mindestens einem ersten Endabschnitt und mindestens einem zweiten Endabschnitt, die gasdicht miteinander verbunden sind, wobei der erste Endabschnitt (2) einen Einsteckbereich (3) aufweist, der in einem Aufnahmebereich (4) des zweiten Endabschnitts (5) eingesteckt ist, **dadurch gekennzeichnet, dass** zwischen dem Einsteckbereich (3) und dem Aufnahmebereich (4) und zwischen einem Sicherungsring (18) und einer stufenförmigen Durchmesserverringerung (19) des Aufnahmebereichs (4) eine metallische Radialdichtung (6) angeordnet ist, wobei die Radialdichtung (6) an einem ersten axialen Ende (10) einen in eine erste Radialrichtung vorstehenden, umlaufenden Vorsprung (11) und an einem zweiten axialen Ende (12) eine erste Dichtlippe (13) aufweist, die entgegengesetzt zur ersten Radialrichtung geneigt ist.

2. Abgasleitung nach Anspruch 1, **dadurch gekennzeichnet, dass** der erste Endabschnitt (2) und der zweite Endabschnitt (5) miteinander verrastet sind.

3. Abgasleitung nach Anspruch 1, **dadurch gekennzeichnet, dass** die Radialdichtung (6) am zweiten axialen Ende (12) eine zweite, in die erste Radialrichtung geneigte Dichtlippe (14) aufweist.

4. Abgasleitung nach Anspruch 3, **dadurch gekennzeichnet, dass** zwischen den Dichtlippen (13, 14) eine Ringnut (15) ausgebildet ist.

5. Abgasleitung nach einem der Ansprüche 1 bis 4, **dadurch gekennzeichnet, dass** eine Mantelfläche (16) der Radialdichtung (6) zu einer Rotationsachse (9) geneigt ist.

6. Abgasleitung nach Anspruch 5, **dadurch gekennzeichnet, dass** die Mantelfläche (16) der Radialdichtung (6) in die erste Dichtlippe (13) stetig übergeht.

7. Abgasleitung nach einem der Ansprüche 3 bis 6, **dadurch gekennzeichnet, dass** sich die erste Dichtlippe (13) axial weiter erstreckt als die zweite Dichtlippe (14).

8. Abgasleitung nach einem der Ansprüche 1 oder 3 bis 7, **dadurch gekennzeichnet, dass** sich der Vorsprung (11) im unbelasteten Zustand der Radialdichtung (6) in Radialrichtung weiter erstreckt als die zweite Dichtlippe (14).

9. Abgasleitung nach einem der Ansprüche 1 bis 8, **dadurch gekennzeichnet, dass** die Radialdichtung (6) radial vorgespannt in einem der Endabschnitte (2, 5) gehalten ist.

10. Abgasleitung nach einem der Ansprüche 1 bis 9, **dadurch gekennzeichnet, dass** der Aufnahmebereich (4) zu einem freien Ende (8) hin einen Bereich (7) mit vergrößertem Durchmesser aufweist, wobei die Radialdichtung (6) in dem Bereich (7) angeordnet ist.

11. Abgasleitung nach einem der Ansprüche 1 bis 10, **dadurch gekennzeichnet, dass** der Einsteckbereich (3) einen Rastvorsprung (21) mit einer Rastseite (23) und einer Anlaufseite (22) aufweist, wobei ein Rastmittel (24) an der Rastseite (23) anliegt.

12. Abgasleitung nach Anspruch 11, **dadurch gekennzeichnet, dass** die Anlaufseite (22) des Rastvorsprungs (21) zur Rotationsachse (9) geneigt ist.

13. Abgasleitung nach Anspruch 11 oder 12, **dadurch gekennzeichnet, dass** das Rastmittel (24) als Federklemme ausgebildet ist, die in einem Schlitz (25) im Aufnahmebereich (4) geführt ist, wobei die Federklemme gegebenenfalls U-förmig ausgebildet ist und Schenkel (26, 27) der Federklemme jeweils einen nach außen gebogenen Abschnitt (28, 29) aufweisen, dessen Innenradius einem Außenradius des Einsteckbereichs (3) entspricht.

14. Abgasanlage eines Kraftfahrzeugs mit einer Abgasleitung nach einem der Ansprüche 1 bis 13.

## Claims

1. Exhaust pipe for a motor vehicle with at least one first end section and at least one second end section which are connected to one another in a gas-tight manner, wherein the first end section (2) has an insertion area (3) which is inserted in a reception area (4) of the second end section (5), **characterised in that** a metal radial seal (6) is arranged between the insertion area (3) and the reception area (4) and between a securing ring (18) and a staggered reduction in diameter (19) of the reception area (4), wherein the radial seal (6) has, at a first axial end (10), a circumferential projection (11) projecting in a first radial direction and, at a second axial end (12), a first sealing lip (13) which is angled opposite to the first radial direction.

2. Exhaust pipe according to claim 1, **characterised in that** the first end section (2) and the second end section (5) are locked together.

3. Exhaust pipe according to claim 1, **characterised in that** the radial seal (6) has, at the second axial end (12), a second sealing lip (14) angled towards the first radial direction.

4. Exhaust pipe according to claim 3, **characterised in that** a ring groove (15) is formed between the sealing lips (13,14).

5. Exhaust pipe according to any one of claims 1 to 4, **characterised in that** an outer surface (16) of the radial seal (6) is angled towards an axis of rotation (9).

6. Exhaust pipe according to claim 5, **characterised in that** the outer surface (16) of the radial seal (6) merges continuously into the first sealing lip (13).

7. Exhaust pipe according to any one of claims 3 to 6, **characterised in that** the first sealing lip (13) extends axially further than the second sealing lip (14).

8. Exhaust pipe according to any one of claims 1 or 3 to 7, **characterised in that** the projection (11), in the unloaded state of the radial seal (6), extends further in the radial direction than the second sealing lip (14).

9. Exhaust pipe according to any one of claims 1 to 8, **characterised in that** the radial seal (6) is held radially preloaded in one of the end sections (2, 5).

10. Exhaust pipe according to any one of claims 1 to 9, **characterised in that** the reception area (4) has an area (7) with an enlarged diameter towards a free end (8), wherein the radial seal (6) is arranged in the area (7).

11. Exhaust pipe according to any one of claims 1 to 10, **characterised in that** the insertion area (3) has a latching projection (21) with a latching side (23) and a contact side (22), wherein a latching means (24) abuts the latching side (23).

12. Exhaust pipe according to claim 11, **characterised in that** the contact side (22) of the latching projection (21) is angled towards the axis of rotation (9).

13. Exhaust pipe according to claim 11 or 12, **characterised in that** the latching means (24) is formed as a spring clip which is guided in a slit (25) in the reception area (4), wherein the spring clip is U-shaped if necessary and arms (26, 27) of the spring clip each have a section (28, 29) bent outwards whose inner radius corresponds to an outer radius of the insertion area (3).

14. Exhaust system of a motor vehicle with an exhaust pipe according to any one of claims 1 to 13.

## Revendications

1. Conduite d'échappement destinée à un véhicule automobile avec au moins un premier tronçon d'extrémité et au moins un deuxième tronçon d'extrémité qui sont reliés l'un à l'autre de manière étanche aux gaz, le premier tronçon d'extrémité (2) comportant une zone d'insertion (3) qui est insérée dans une zone de logement (4) du deuxième tronçon d'extrémité (5), **caractérisée en ce qu'**un joint à lèvres (6) métallique est disposé entre la zone d'insertion (3) et la zone de logement (4) et entre un anneau d'arrêt (18) et une réduction de diamètre (19) graduelle de la zone de logement (4), le joint à lèvres (6) comportant au niveau d'une première extrémité axiale (10) un épaulement périphérique (11) qui dépasse dans une première direction radiale et au niveau d'une deuxième extrémité axiale (12) une première lèvre d'étanchéité (13) qui est inclinée à l'opposé de la première direction radiale.

2. Conduite d'échappement selon la revendication 1, **caractérisée en ce que** le premier tronçon d'extrémité (2) et le deuxième tronçon d'extrémité (5) sont enclenchés l'un avec l'autre.

3. Conduite d'échappement selon la revendication 1, **caractérisée en ce que** le joint à lèvres (6) comporte au niveau de la deuxième extrémité axiale (12) une deuxième lèvre d'étanchéité (14) inclinée dans la première direction radiale.

4. Conduite d'échappement selon la revendication 3, **caractérisée en ce qu**'une rainure annulaire (15) est réalisée entre les lèvres d'étanchéité (13, 14).

5. Conduite d'échappement selon l'une des revendications 1 à 4, **caractérisée en ce qu**'une surface enveloppante (16) du joint à lèvres (6) est inclinée par rapport à un axe de rotation (9).

6. Conduite d'échappement selon la revendication 5, **caractérisée en ce que** la surface enveloppante (16) du joint à lèvres (6) se transforme de manière continue en première lèvre d'étanchéité (13).

7. Conduite d'échappement selon l'une des revendications 3 à 6, **caractérisée en ce que** la première lèvre d'étanchéité (13) s'étend de façon axiale plus loin que la deuxième lèvre d'étanchéité (14).

8. Conduite d'échappement selon l'une des revendications 1 ou 3 à 7, **caractérisée en ce que**, lorsque le joint à lèvres (6) est à l'état non contraint, l'épaulement (11) s'étend en direction radiale plus loin que la deuxième lèvre d'étanchéité (14).

9. Conduite d'échappement selon l'une des revendications 1 à 8, **caractérisée en ce que** le joint à lèvres (6) est maintenu, avec une précontrainte radiale, dans l'un des tronçons d'extrémité (2, 5).

10. Conduite d'échappement selon l'une des revendications 1 à 9, **caractérisée en ce que** la zone de logement (4) comporte vers une extrémité libre (8) une zone (7) avec un diamètre agrandi, le joint à lèvres (6) étant disposé dans la zone (7).

11. Conduite d'échappement selon l'une des revendications 1 à 10, **caractérisée en ce que** la zone d'insertion (3) comporte un épaulement d'enclenchement (21) avec un côté d'enclenchement (23) et avec un côté de mise en place (22), un moyen d'enclenchement (24) s'appuyant contre le côté d'enclenchement (23).

12. Conduite d'échappement selon la revendication 11, **caractérisée en ce que** le côté de mise en place (22) de l'épaulement d'enclenchement (21) est incliné par rapport à l'axe de rotation (9).

13. Conduite d'échappement selon la revendication 11 ou 12, **caractérisée en ce que** le moyen d'enclenchement (24) est conçu comme une pince à ressort qui est guidée dans une fente (25) dans la zone de logement (4), la pince à ressort étant conçue le cas échéant en forme de U et des branches (26, 27) de la pince à ressort comportant à chaque fois un tronçon (28, 29) qui est courbé vers l'extérieur et dont le rayon intérieur correspond au rayon extérieur de la zone d'insertion (3).

14. Système d'échappement d'un véhicule automobile avec une conduite d'échappement selon l'une des revendications 1 à 13.
